# EUROPÄISCHE PATENTSCHRIFT

(11) **EP 0 436 703 B1**
(45) Veröffentlichungstag und Bekanntmachung des Hinweises auf die Patenterteilung: **23.03.1994**
(21) Anmeldenummer: 90911752.5
(22) Anmeldetag: 03.08.1990
(51) Int. Cl.: A47J 39/00

(54) **VERFAHREN UND EINRICHTUNG ZUR ZUBEREITUNG VON SPEISEN**
PROCESS AND DEVICE FOR PREPARING MEALS
PROCEDE ET DISPOSITIF POUR PREPARER DES ALIMENTS

(30) Priorität: 03.08.1989 CH 2883/89
(43) Veröffentlichungstag der Anmeldung: 17.07.1991
(73) Patentinhaber: MENU SYSTEM WUEST & CO., CH-9014 St. Gallen (CH)
(72) Erfinder: WUEST, Ernst, CH-9030 Abtwil (CH)
(74) Vertreter: Kulhavy, Sava, Dipl.-Ing.
(86) Internationale Anmeldenummer: CH9000187
(87) Internationale Veröffentlichungsnummer: WO9101674

(56) Entgegenhaltungen:
- EP-A-02 773 37
- DE-A- 2 659 865
- DE-U- 8 131 827
- FR-A- 1 414 942
- FR-A- 2 624 105

## Beschreibung

Die vorliegende Erfindung betrifft ein Verfahren zur Zubereitung von Speisen sowie eine Einrichtung zur Durchführung dieses Verfahrens.

In EP-A-0 233 535 sind ein Verfahren sowie eine Einrichtung der genannten Gattung offenbart. Diese vorbekannte Einrichtung weist ein Gehäuse auf, in welchem ein Garraum ausgebildet ist. Dieser Garraum ist mit Hilfe einer am Gehäuse angebrachten Tür verschliessbar. Diese Tür ermöglicht die Be- und Entladung des Garraumes mit Speisen. Im Garraum befinden sich Heizkörper, welche ein Schaufelrad umgeben. In einer der Wände des Gehäuses ist eine Beschwadungsdüse eingebaut, durch welche Wasser in den Garraum intermittierend eingesprüht werden kann. Diese vorbekannte Einrichtung umfasst auch eine Steuervorrichtung, welche die Zusammenarbeit der einzelnen Bestandteile dieser Einrichtung steuert. Am Boden des Garraumes ist ein Ablauf für das im Garraum kondensierte Wasser angebracht, welchem ein Kondensator nachgeschaltet ist. Ueber ein Magnetventil wird dem Kondensator Kühlwasser im Bedarfsfall und in gesteuerter Weise zugeführt. Das Ablaufrohr und der Kondensator haben einen gegeben Querschnitt, der sich nicht ändern lässt.

Nach einem Einsprühen von Wasser durch die Beschwadungsdüse in den erhitzten Garraum, bildet sich in diesem sofort Dampf und dadurch wird der Druck im Garraum etwas erhöht. Da das Ablaufrohr und der Kondensator jedoch ständig offen sind, entweicht dieser leichte Ueberdruck sofort durch das Ablaufrohr aus dem Garraum. Für bestimmte Zwecke, wie zum Beispiel für ein äusserst rasches Garen von tiefgekühlten Produkten, ist jedoch eine wesentlich intensivere Behandlung der Produkte mit Dampf erforderlich. Eine solche Behandlung ist weder mit der genannten vorbekannte Einrichtung noch mit einer anderen Einrichtung des Standes der Technik erzielbar.

Die Aufgabe der vorliegenden Erfindung ist, ein Verfahren anzugeben, welches den genannten Nachteil beseitigt.

Diese Aufgabe wird beim Verfahren der eingangs genannten Gattung erfindungsgemäss so gelöst, wie dies im kennzeichnenden Teil des Anspruchs 1 definiert ist.

Eine zur Durchführung dieses Verfahrens geeignete Einrichtung ist im kennzeichnenden Teil des Anspruchs 8 definiert.

Nachstehend werden Ausführungsformen der vorliegenden Erfindung anhand der beiliegenden Zeichnungen näher erläutert. Es zeigt:
Fig. 1 den wesentlichen Teil der vorliegenden Einrichtung in einer Frontansicht,
Fig. 2 schematisch und in einem vertikalen Schnitt eine Schale, welche einen weiteren Bestandteil der vorliegenden Einrichtung darstellt und
Fig. 3 in einer Draufsicht die Schale gemäss Fig. 2.

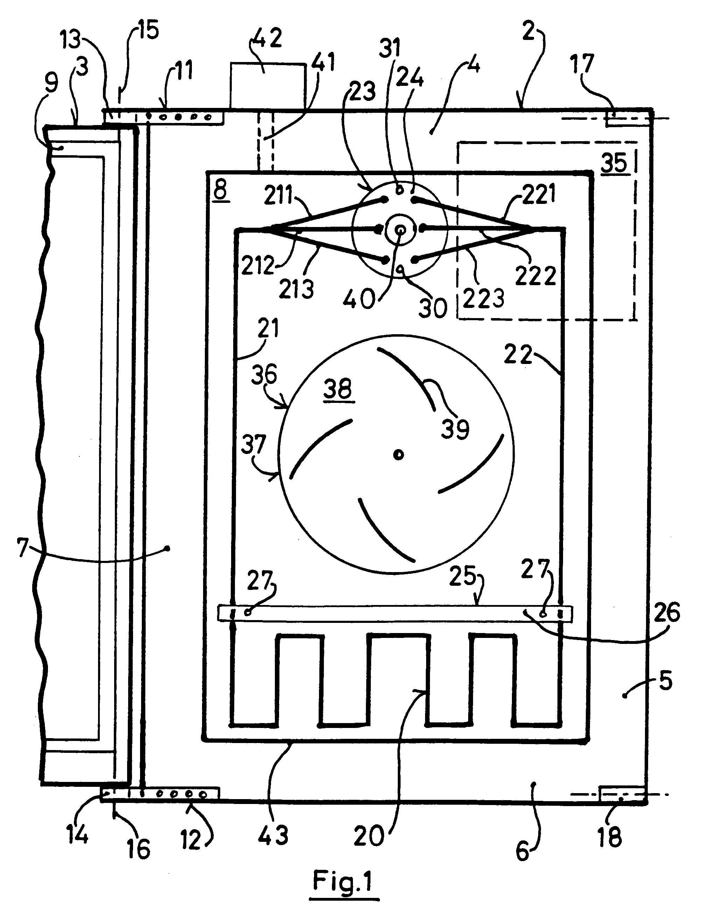

Der in Fig. 1 dargestellte Teil der vorliegenden Einrichtung zur Zubereitung von Speisen weist einen Ofen auf. Dieser Ofen umfasst einen praktisch quaderförmigen Mantel 2, welcher einen Garraum für die zuzubereitenden Speisen begrenzt. Eine der Wände des Mantels 2, im dargestellten Beispiel ist dies die Frontwand 3 desselben, ist als eine Tür ausgeführt. Der Mantel 2 umfasst ferner vier Seitenwände 4, 5, 6 und 7 sowie eine Hinterwand 8. Die Wände 3 bis 8 des Mantels weisen eine äussere Hülle und eine innere Hülle auf (nicht dargestellt), welche aus einem schlagfesten Material, beispielsweise aus Metall, sind. Zwischen diesen Schichten befindet sich wärmeisolierendes Material einer an sich bekannten Art. Die Wände des Mantels 2 sind folglich verhältnismässig dick, was bei den Seitenwänden 4, 5, 6 und 7 des Mantels 2 aus der Zeichnung ersichtlich ist.

Die Tür 3 ermöglicht die Be- und Entladung des Garraumes mit den zuzubereitenden Speisen. Die Tür ist so ausgeführt, dass sie sich hermetisch bzw. druckdicht verschliessen lässt. Dies ist im vorliegenden Fall besonders wichtig, weil der Ofen mit einem zeitweise beträchtlichen Ueberdruck im Garraum arbeitet. Um den Garraum luftdicht verschliessen zu können, ist ein in sich geschlossener Streifen 9 aus einem nachgiebigen Material an der Innenseite der Tür 3 angebracht, welcher von der Tür-Innenseite absteht. Dieser Dichtstreifen 9 ist in jenem Bereich der Tür-Innenwand verlegt, welcher den genannten Stirnflächen der Seitenwände 4 bis 7 gegenübersteht. Wenn die Tür 3 geschlossen ist, dann liegt der Dichtstreifen 9 an den Stirnflächen der Seitenwände 4 bis 7 des Mantels 2 dichtend auf.

Im Bereich einer der vertikal verlaufenden Seitenwände 7 des Mantels 2 sind Scharniere 11 und 12 angebracht. Diese sind im wesentlichen als Materialstreifen ausgeführt, welche an der Stirnfläche der horizontalen horizontalen Mantelwände 4 und 6, beispielsweise mit Hilfe von Schrauben, befestigt sind. Diese Scharniere 11 und 12 sind nahe an der Aussenkante bzw. Aussenhülle der jeweiligen Mantelwand 4 bzw. 6 befestigt und sie sind verhältnismässig schmal. Die Scharniere 11 und 12 weisen einen ösenförmigen Abschnitt 13 bzw. 14 auf, welcher von der Aussenseite der vertikalen Seitenwand 7 absteht. Die Oesenabschnitte 13 und 14 können aus der Ebene der Stirnflächen der Seitenwände 4 bis 7 ausgebogen sein, um die Dicke des Dichtstreifens 9 ausgleichen zu können.

Die Höhe der Tür 3 ist zumindest um zwei Breiten der streifenförmigen Scharniere 11 und 12 kleiner als die Höhe der vertikalen Wände 5 und 7 des Mantelgehäuses. Einer der vertikalen Randbereiche der Tür 3 kann somit zwischen den Scharnierstreifen 11 und 12 insbesondere zwischen den ösenförmigen Abschnitten 13 und 14 derselben Platz finden. An jenen Stellen der horizontalen Kanten der Tür 3, welche sich im Bereich der Oesen 13 und 14 befinden, sind Zapfen 15 und 16 angebracht, welche von den Türkanten in vertikaler Richtung abstehen. Diese Zapfen 15 und 16 sind von den Oesen 13 und 14 der Scharniere 11 und 12 umgeben bzw. umfasst, so dass die Tür 3 um die durch die Zapfen 15 und 16 hindurchgehende Achse geschwenkt werden kann.

An der Stirnfläche der gegenüberliegenden und ebenfalls vertikal verlaufenden Mantelwand 5 sind Schnapp-Verschlüsse 17 und 18 für die Tür 3 angebracht. Diese Schnapp-Verschlüsse 15 und 16 sind im dargestellten Fall als Walzen ausgeführt, deren Längsachse praktisch horizontal verläuft. Die Walzen sind im Ofenmantel federnd schwenkbar gelagert, wobei sie in der vertikalen Richtung aus ihrer Grundstellung ausgeschwenkt werden können. Der jeweilige Verschluss 17 bzw. 18 ist ebenfalls sehr nahe an der Aussenkante bzw. an der Aussenhülle der jeweiligen Horizontalwand 4 bzw. 6 angeordnet. Die Kantenflächen in jenem vertikalen Randbereich der Tür 3, welcher dem Scharnier-Randbereich gegenüberliegt, weisen Vertiefungen (nicht dargestellt) auf, in welchen die Walze des jeweiligen Verschlusses 17 bzw. 18 einrasten kann.

Im Garraum bzw. im Inneren des Gehäuses 2 befindet sich zumindest ein Heizkörper 20, welcher vorteilhaft ein elektrischer Heizkörper ist. Der Heizkörper 20 ist an der Innenseite einer der feststehenden Wände des Garraum-Mantels befestigt. Im dargestellten Beispiel ist der Heizkörper 20 an der Innenseite der Mantel-Hinterwand 8 angebracht, wobei er sich allerdings in einem Abstand von dieser befindet. Um eine möglichst schnelle und wirksame Uebertragung der Wärmeenergie in den Garraum zu erzielen, ist der eigentliche Heizkörper 20 praktisch meanderförmigg ausgeführt, wodurch die Länge desselben beträchtlich verlängert werden kann. Die Krümmungen der Meanderform liegen in einer Ebene und diese Ebene liegt praktisch parallel zur Mantel-Hinterwand 8. Der Heizkörper 20 befindet sich im unteren Bereich des Garraumes, weil es bekannt ist, dass warme Luft und überhitzter Dampf steigen.

An den eigentlichen Heizkörper 20 schliessen sich die Speiseschenkel 21 und 22 desselben an. In diesen Speiseschenkeln 21 und 22 befinden sich Zuleitungen zum eigentlichen Heizkörper 20. Die Speiseschenkel 21 und 22 verlaufen praktisch geradlinig und sie erstrecken sich vom eigentlichen Heizkörper 20 empor, wo sie im mittleren Bereich des Ofenmantels 2 zusammenlaufen. In diesem Ofenbereich ist eine Durchführung 23 in der Mantel-Hinterwand 8 ausgeführt. Mit Hilfe dieser Durchführung 23 sind die Speiseschenkel 21 und 22 aus dem Inneren des Mantels 2 ausgeführt. Die Durchführung 23 weist eine Platte 24 mit einem kreisförmigen Umriss auf. Diese Platte 24 ist etwa gleich dick wie die Hinterwand 8 des Ofens und sie kann in die Hinterwand 8 in einer dichtenden Weise eingesetzt werden. Zu diesem Zweck kann die Umfangswand der Durchführungsplatte 24 mit einem Gewinde versehen sein, welche in ein entsprechendes Gewinde in der Hinterwand 8 eingeschraubt werden kann.

Eine weitere Steigerung der dem Garraum zugeführten Wärmeenergie kann in der Weise erreicht werden, dass mehrere Heizkörper 20 der beschriebenen Art verwendet werden. Im dargestellten Fall sind drei ähnlich ausgeführte Heizkörper 20 verwendet, welche nebeneinander bzw. übereinander liegen. In der Zeichnung sind die Speiseschenkel 211, 212, 213 bzw. 221, 222 223 der Heizkörper 20 dargestellt. Diese Speiseschenkel 211 bis 223 sind gegenüber den Vertikalschenkeln 21 und 22 unterschiedlich abgebogen, damit jedem ein gesonderter Durchgang in der Durchführung 23 zugeordnet sein kann.

Damit die Lage des Heizkörpers 20 bzw. der Heizkörper festgelegt ist, ist eine Klammer 25 vorgesehen. Diese Klammer 25 umfasst ein Joch 26, welches als eine Leiste oder ähnlich ausgeführt ist. Diesem Joch 26 ist zumindest eine zweite Leiste (nicht dargestellt) zugeordnet, welche sich zwischen der Mantel-Hinterwand 8 und dem Joch 26 befindet. Zwischen der genannten Grundleiste und dem Joch 26 befinden sich die geradlinigen Schenkel 21 und 22 des Heizkörpers 20. Das Joch 26 und die Grundleiste sind mit Hilfe von Schrauben 27 an der Hinterwand 8 befestigt. Falls mehrere Heizkörper 20 im Garraum untergebracht sind, so liegen sie in der bereits beschriebenen Weise aneinander. Zwischen den einzelnen Heizkörpern 20 befinden sich in einem solchen Fall Zwischenleisten (nicht dargestellt). Das Joch 26 sowie die übrigen Leisten der Klammer 25 können Vertiefungen aufweisen, in welchen die Speiseschenkel 21 und 22 liegen können.

Im Garraum befindet sich auch der Fühler 30 eines Thermometers.

Der Thermofühler 30 ist an der Platte 24 der Durchführung 23 und unter den Durchgängen der Heizkörper-Zuleitungen 211 bis 223 angeordnet, so dass er von der in den Heizkörper-Zuleitungen entwickelten Hitze möglichst wenig beeinflusst werden kann. Die Ausführleitungen des Thermofühlers 30 sind durch die Platte 24 der Durchführung 23 hindurchgeführt. Im Garraum befindet sich ferner der Fühler 31 eines Druckmessers. Der Druckmesser-Fühler 31 ist ebenfalls an der Platte 24 der Durchführung 23 angeordnet und die Ausfhührleitungen dieses Fühlers 31 gehen ebenfalls durch die Platte 24 der Durchführung 23 hindurch.

Die Ausführleitungen des Thermometer-Fühlers 30 und des Druckmesser-Fühlers 31 sind an eine Steuervorrichtung 35 angeschlossen, welche an der Aussenseite der Gehäusehinterwand 8 angebracht ist. Diese Steuervorrichtung 35 bildet einen weiteren Bestandteil der vorliegenden Einrichtung und sie ist ausserhalb des Garraumes angeordnet.

Die Einrichtung weist auch einen Ventilator 36 auf, dessen Betrieb durch die Steuervorrichtung 35 steuerbar ist. Dieser Ventilator 36 enthält ein Turbinenrad 37, welches auf der Welle eines Antriebsmotors befestigt ist. Das Turbinenrad befindet sich im Garraum, während der Motor ausserhalb des Garraumes angeordnet ist. Das Turbinenrad 37 ist möglichst nahe an einer der festen Wände des Ofenmantels angeordnet. Im dargestellten Fall ist der Ventilator 36 der Hinterwand 8 des Ofens zugeordnet.

Das Turbinenrad 37 kann eine Scheibe 38 aufweisen, welche auf der Antriebswelle des Motors zentral befestigt ist. Diese Scheibe 38 kann in der Ofenwand eingelassen sein. Die dem Inneren des Garraumes zugewandte Oberfläche der Scheibe 38 ist mit Rippen 39 versehen, welche von dieser Oberfläche abstehen und bogenförmig verlaufen. Die Tangente zur Mitte einer solchen Rippe 39 schliesst mit der Tangente in diesem Bereich des Umfanges der Scheibe 38 einen Winkel von etwa 45 Grad ein.

Der Antriebsmotor des Ventilators 36 befindet sich ausserhalb des Garraumes, so dass die Motorwelle durch die betreffende Wand 8 des Ofengehäuses hindurchgeht. Diese Durchgangsstelle der Antriebswelle ist luftdicht ausgeführt. Das auf dieser Welle sitzende Turbinenrad 37 dient vor allem zur Umwälzung von Luft und Dampf im Garraum. Diese Umwälzung ermöglicht unter anderem, dass die Temperatur im Garraum während der Zubereitung von Speisen überall praktisch dieselbe ist.

In das Innere des Garraumes mündet eine Düse 40, durch welche Wasser in den Garraum eingeführt werden kann. Diese Düse 40 ist in der Platte 24 der Durchführung 23 eingesetzt und ihr sich ausserhalb des Garraumes befindliche Ende ist an eine Wasserquelle angeschlossen. Diese Quelle (nicht dargestellt) befindet sich ausserhalb des Garraumes und deren Betrieb ist durch die Steuervorrichtung 35 gesteuert. Die Wasserquelle ist derart ausgeführt, dass sie kleine und dosierte Mengen von Wasser unter Druck durch die Düse 40 in den Garraum einführen kann. Die Wasserquelle enthält eine Pumpe, welche dosierte Mengen von Wasser abgeben kann.

Die Düse 40 kann derart angeordnet sein, dass die Mündung derselben in das Innere des Garraumes gerichtet ist. Die Düse 40 kann jedoch auch so angerondet sein, dass sie gegen einen der Bestandteile des Garraumes gerichtet ist, welcher aus dem zugeführten Wasser Nebel oder/und Dampf bilden kann. Wenn die Düse 40 gegen das Turbinenrad 37 des Gebläses 36 gerichtet ist, dann wird das Wasser, welches in Form eines Strahles durch die Düse 40 in den Garraum gelangt, durch das sich drehende Turbinenrad 37 in Nebel umgwandelt. Dieser Nebel wird sehr schnell zu Dampf, weil im Garraum sich die Heizkörper 20 befinden. Wenn die Düse 40 gegen den Heizkörper 20 gerichtet ist, dann wird das zugeführte Wasser unmittelbar in Dampf umgewandelt.

Das Gehäuse des Ofens weist neben der Oeffnung, welche durch die Tür 3 geschlossen werden kann, noch eine weitere Oeffnung 41 auf, welche als ein Kanal in einer der Wände 4 bis 8 des Ofenmantels ausgeführt ist. Der Querschnitt dieses Kanals 41 ist klein, wobei die Grösse dieses Querschnittes zudem noch veränderbar ist. Die Oeffnung 41 ist Zwecks einer einfachen Darstellung in der Deckenwand 4 des Garraumes angedeutet. Die Grösse des Querschnittes dieser Oeffnung 41 kann mit Hilfe eines Drosselventils 42 an sich bekannter Art geändert werden. Diese Drossel 42 ist im dargestellten Fall der äusseren Mündung der Oeffnung 41 zugeordnet. Die Drossel 42 ist an die Steuervorrichtung 35 angeschlossen und die Aenderung des Querschnittes des Kanals 41 erfolgt aufgrund der von der Steuervorrichtung 35 abgegebenen Befehle. Das Ventil 42 kann im Mantel des Garraumes jedoch auch eingelassen sein, und zwar vorteilhaft in einer seiner feststehenden Wände. Der verschliessbare Kanal 41 kann eine strömungsmässige Verbindung zwischen dem Inneren des Garraumes und der Umgebung der vorliegenden Einrichtung herstellen.

Die Steuervorrichtung 35 ist derart ausgeführt, dass sie die Zusammenarbeit der einzelnen Bestandteile der vorliegenden Einrichtung steuert. Die Steuervorrichtung 35 enhtält ferner auch eine Anordnung zur Ermittlung von Zeitintervalen, d.h. eine Uhr bzw. einen Taktgenerator (nicht dargestellt). Auch solche Anordnungen sind an sich bekannt und sie im Handel ohne weoteres ehältlich.

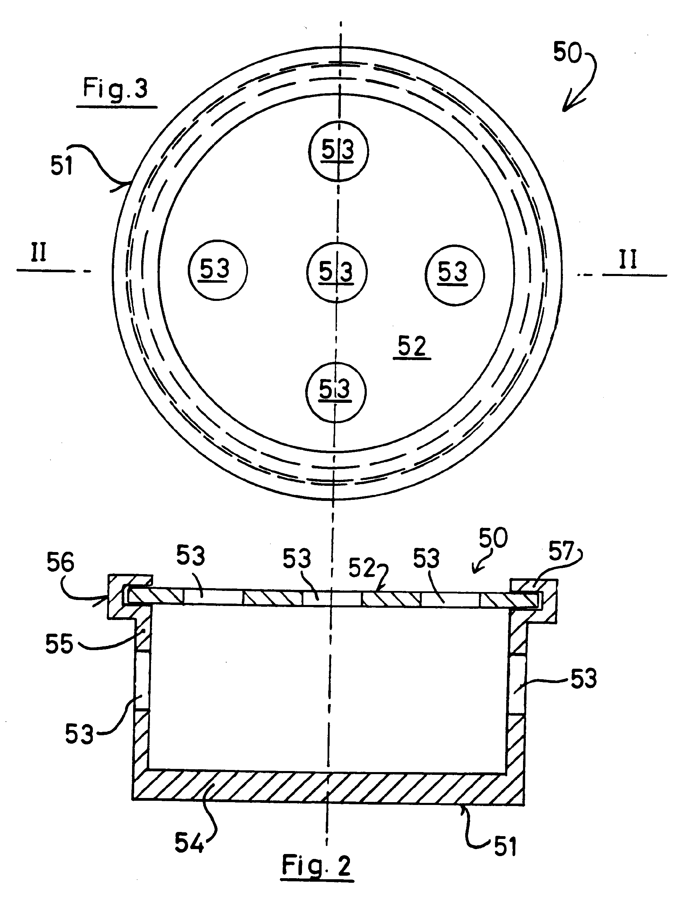

Die vorliegende Einrichtung umfasst auch Schalen 50 zur Aufnahme der zuzubereitenden Speisen. Eine dieser Schalen ist in den Fig. 2 und 3 schematisch dargestellt. Die Schale 50 weist einen Unterteil 51 und einen Deckel 52 auf, wobei der Deckel 52 mit Durchgangsöffnungen 53 versehen ist. Der Schalenunterteil 51 weist einen Boden 54 und eine Wand 55 auf, wobei die Wand 55 sich an den Rand des Bodens 54 anschliesst. Die freie Randpartie der Schalenwand 55 ist mit Mitteln 56 zur Halterung des Deckels 52 auf dem Unterteil 51 versehen. Diese Mittel 56 können als ein umlaufender Materialstreifen 57 ausgeführt sein, welcher die Randpartie des Deckels 52 umgreift. Die Durchlassöffnugen 53 können auch in der Wand 55 oder/und im Boden 56 der Schale 50 ausgeführt sein, wie dies in Fig. 2 bloss schematisch angedeutet ist. Durch die Oeffnungen 53 kann Dampf in das Innere der Schale 50 und dann in die Zwischenräume eindringen, welche zwischen den sich in der jeweiligen Schale befindlichen Speisekomponenten vorhanden sind. Die Schalen 50 können auf dem Boden 43 des Garraumes oder/und auf einem geeigneten Gestell bzw. auf zusätzlichen Böden (nicht dargestellt) aufgestellt sein, welche sich im Garraum befinden.

Speisen werden im Garraum aufgestellt, die Garraumtür 3 wird luftdicht geschlossen und über ein betreffendes Betätigungsorgan an der Steuervorrichtung 35 wird die gewünschte Zubereitungsweise der sich im Garraum befindlichen Speisen ausgewählt.

Während der Zubereitung der Speisen werden explosionsartige Dampfstösse im Garraum erzeugt. Bei diesen Dampfstössen wird der Druck im Garraum sprunghaft erhöht, was das Eindringen von Dampf bis zu den sich in der jeweiligen Schale befindlichen Speisen begünstigt. Wie gesagt, kann Dampf auf diese Weise bis in die Zwischenräume eindringen, welche zwischen den sich in der Schale befindlichen Speisen bzw. Komponenten derselben vorhanden sind. Denn es ist bekannt, dass die meisten Speisen eine unebene Oberfläche aufweisen, in welcher Spalte oder dgl. vorhanden sind. Ausserdem sind Spalte zwischen den sich in der Schale befindlichen Speisekomponenten vorhanden.

Bevor der erste Dampfstoss erzeugt wird, ist es zweckmässig, die im Garraum vorhandene Luft zu erwärmen. Diese Anwärmung erfolgt mit Hilfe des genannten Heizkörpers. Während dieser Anwärmungsphase ist das genannte Ventil geschlossen, so dass es keine strömungsmässige Verbindung zwischen dem inneren des Garraumes und der Umgebung der vorliegenden Einrichtung gibt. Mit der zunehmenden Erwärmung der Luft im Garraum steigt daher auch der Druck im luftdicht verschlossenen Garraum. Die Erwärmung der Luft im Garraum zeigt die ersten Einwirkungen auf die hier aufgestellten und eigentlich immer noch gefrorenen Speisen. Die Oberflächenschicht derselben wird aufgetaut.

Diese Erwärmungs- bzw. Erhitzungsphase wird beendet, sobald das Thermometer eine Temperatur zwischen etwa 90 und 100 Grad Celsius anzeigt. Diese Anwärmungspahse endet bei der Temperatur von etwa 90 Grad Celsius, wenn Speisen bloss regeneriert werden sollen. Wenn Speisen gebacken, getoastet, gedämpft oder dgl. werden sollen, dann endet die Anwärmungsphase erst bei der Temperatur von etwa 100 Grad Celsius.

Am Schluss der Anwärmungsphase kann das Ventil geöffnet werden, so dass Luft, gegebenenfalls vermischt mit Feuchtigkeit, welche sich aus dem Auftauen der Oberflächenschicht der Speisen ergeben hat, durch den Kanal im Ventil aus dem Garraum entweichen kann, bis der Druck im Garraum dem Umgebungsdruck ungefähr gleicht. Die Erreichung dieses Umgebungsdruckes wird vom genannten Druckgeber im Garraum registriert und dieser gibt ein ensprechendes Signal an die Steuervorrichtung ab. Als Folge dieses Signals wird die verschliessbare Oeffnung im Mantel des Garraumes, d.h. das Ventil, geschlossen und die Bildung von Dampfetuptionen im Garraum kann beginnen.

Unter Umständen kann es jedoch zweckmässiger sein, das Ventil während der Anwärmungsphase offen zu halten. Dieses Ventil bzw. die Oeffnung in diesem wird bei der Erreichung einer vorgegebenen Anwärmungstemperatur geschlossen und die Bildung von Dampfstössen im Garraum kann beginnen.

Zur Bildung der Dampfstösse wird Wasser durch die Düse in den Garraum eingeführt. Diese Einführung kann in der Weise erfolgen, dass Wasser in den Garraum eingespritzt wird. Das Wasser kann in den Garraum jedoch auch in Form von Nebel eingeführt, d.h. eingesprüht, werden. In diesen Fällen wird der Wasserstrahl einfach gegen das Innere des Garraumes hin gerichtet. Da die Luft im Garraum die genannte und verhältnismässig hohe Temperatur aufweist, wird das eingespritzte oder eingesprühte Wasser im Garraum in Dampf umgewandelt.

In bestimmten Anwendungsfällen dieses Verfahrens ist es zweckmässig, den Wasserstrahl, welcher in den Garraum durch die Düse gelangt, gegen einen der Bestandteile des Garraumes zu richten. Diese Bestandteile können aus dem zugeführten Wasser Nebel oder/und Dampf bilden. Wenn Wasser gegen das Turbinenrad des Ventilators gespritzt wird, dann bildet sich unter Einwirkung des sich schnell drehenden Rades zunächst Nebel daraus und aus diesem Nebel entsteht, wegen der hohen Innentemperatur im Garraum, Dampf. Wenn das zugeführte Wasser gegen den Heizkörper gespritzt wird, dann entsteht daraus direkt Dampf.

Es versteht sich, dass Dampf auch ausserhalb des Garraumes erzeugt werden kann und dass so erzeugter Dampf dann durch die Düse in den Garraum eingeführt wird. Diese Massnahme kann in bestimmten Anwendungsfällen dieses Verfahrens zweckmässig sein.

Hierzu ist jedoch ein zweiter und ausserhalb des Garraumes angeordneter Heizkörper erforderlich.

Bei der Entstehung von Dampf nimmt der Druck im jetzt wieder luftdicht geschlossenen Garraum sprunghaft zu, was die genannten Dampfstösse bewirkt. Der Spitzendruck im Garraum kann dabei einen Wert einnehmen, welcher bei 0,7 Bar liegt. Zur Bildung solcher Dampfstösse werden dosierte Mengen von Wasser in den Garraum eingeführt. Eine solche Dosis kann beispielsweise 2 bis 3 Gramm Wasser oder noch weniger enthalten. Solche Wassermengen werden durch die vorstehend genannte Wasserquelle geliefert, an welche die Düse angeschlossen ist. Je mehr Wasser in den Garraum eingeführt wird, um so grösser ist der Ueberdruck in diesem, weil angenommen wird, dass der Heizkörper eine ausreichende Leistung abgeben kann, und um so länger hält auch der Ueberdruck im Garraum an. Der im Garraum vorhandene Dampf gibt einen Teil seiner Wärme an die Speisen ab und er kondensiert. Die Absenkung der Dampftemperatur verursacht unter anderem auch einen damit einhergehenden Druckabfall im Garraum.

Der Druck im Garraum wird durch den ebenfalls bereits erwähnten Druckmesser überwacht. Wenn der Druck im Garraum bis auf einen vorgegebenen Wert, beispielsweise auf einen Wert von 0,025 Bar, absinkt, dann wird eine weitere dosierte Menge von Wasser in den Garraum eingeführt und in Dampf umgewandelt. Die Zeitspanne zwischen zwei aufeinander folgenden Einführungen von Wasser in den Garraum kann beispielsweise 10 Sekunden lang sein. Die Länge dieser Zeitspanne ist in der Regel veränderlich und sie wird in den meisten Fällen von einer Wassereinführung zur anderen länger. Dies deswegen, weil die Speisen während der Behandlung derselben mit Dampf wärmer und wärmer werden, so dass sie dem zugeführten Dampf die Wärme immer langsamer und langsamer entnehmen. Wenn man diese Zeitspanne über die ganze Behandlungsdauer gleich lang halten will, dann kann man die Menge des zur Bildung der aufeinander folgenden Dampfstösse erforderlichen Wassers dementsprechend jeweils verkleinern.

Wenn die Erzeugung eines weiteren Dampfstosses nur von der Erreichung eines vorgegebenen Druckabfalles im Garraum am Ende der Behandlung der Speise mit dem vorangehenden Dampfstoss abhängt, dann kann die vorstehend ebenfalls bereits genannte Vorrichtung zur Erfassung von Zeitintervalen die Länge der Zeitspannen zwischen zwei aufeinander folgenden Dampfstössen messen. Wenn die Länge dieser Zeitspanne grösser ist als ein vorgegebener Wert, dann kann man daraus schliessen, dass die gewünschte Behandlung der Speise beendet ist. Die Steuervorrichtung stellt die Erzeugung weiterer Dampfstösse automatisch ab. Die Dauer der Behandlung einer Speise durch die Dampfstösse kann für gegebene Behandlungsweisen und gegebene Speisen jedoch auch fest eingestellt sein, so dass die Erzeugung weiterer Dampfstösse nach Ablauf der eingestellten Zeitspanne automatisch beendet wird. Am Ende der Behandlung bleibt die Oeffnung im Garraum-Mantel zweckmässigerweise geschlossen.

Eine intensivere Behandlung der Speisen kann erreicht werden, wenn die Oeffnung im Garraum-Mantel vor der nächsten Einführung von Wasser in den Garraum kurzzeitig geöffnet wird, damit sich der Druck im Garraum an den Umgebungsdruck angleicht. Dies bedeutet, dass der Druck im Garraum während einer solchen Oeffnung des Garraumes auf den Wert des Umgebungsdruckes sinken kann. Hiernach wird die Oeffnung im Mantel des Garraumes, beispielsweise das Ventil, wieder geschlossen und eine weitere Dosis von Wasser kann in den Garraum eingeführt werden.

Der Zeitpunkt des vorübergehenden Oeffnens der Oeffnung im Garraum-Mantel kann jedoch auch auf eine vorgegebene Zeitspanne gebunden sein, welche seit der zuletzt erfolgten Einführung von Wasser verstrichen ist.

Die Wahl der Länge der Zeitspanne zwischen zwei aufeinander folgenden vorübergehenden Oeffnungen des Ventils hängt auch vom jeweils gewählten Programm zur Behandlung von Speisen ab. Die Anzahl der Bearbeitung der Speisen durch Dampfstösse hängt unter anderem auch von der Art der gewünschten Behadlung, von der Art der zu behandelnden Speisen, von der Menge der zu behandelnden Speisen usw. ab. Die diesbezüglichen Angaben können für den jeweiligen Behandlungsfall unter Benützung einer an sich bekannten Tastatur oder dgl. an der Steuervorrichtung eingegeben werden, wobei die Steuervorrichtung dann den eigentlichen Behandlungspozess automatisch durchführt.

Falls die Speisen nach der Beendigung der Behandlung derselben nicht sofort serviert werden, dann ist es am zweckmässigsten, diese im Garraum stehen zu lassen. Denn hier gibt es eine Restwärme, welche die zubereitete Speisen warm hält und ausserdem gibt es im hermetisch geschlossenen Garraum auch eine Restfeuchtigkeit, welche die Speisen frisch hält. Folglich ist es ratsam, die Speisen erst unmittelbar vor dem Servieren derselben dem Garraum zu entnemmen.

Zur noch intensiveren Behandlung von Speisen kann die Oeffnung im Garraum-Mantel zwischen zwei aufeinander folgenden Dampfstössen mehrmals und jeweils während einer verhältnismässig sehr kurzen Zeitspanne geöffnet werden. Dies beschleunigt den Druckabfall im Garraum und ermöglicht, dass frischer heisser Dampf in den Garraum früher eingeführt werden kann. Bei diesem kurzzeitigen Oeffnen der Garraum-Oeffnung entweicht zwar aus dem Garraum ein Teil vom bereits eingeführten und noch verhältnismässig heissen Dampf, aber die nächste und energiereichere Dampfcharge kann früher eingeführt werden, als wenn man warten würde, bis alle verfügbare Wärmeenergie aus der bereits eingeführten Dampfmenge als Folge der Uebergabe der Wärmeenergie an die Speise im luftdicht verschlossenen Garraum stattfindet. Die zur Behandlung einer Speise erforderliche Menge von Wärmeenergie kann der Speise bei diesem wiederholten und sehr kurzen Oeffnen der Garraum-Oeffnung somit während einer kürzeren Zeitspanne zugeführt werden. Dadurch wird die gesamte Behandlungsdauer von Speisen im Garraum verkürzt. Diese Verkürzung kann bis zu 30% der Zeit betragen, welche für die Wärmeübergabe ohne das wiederholte Oeffnen der Garraum-Oeffnung benötigt wird.

Die Heizung im Garraum kann auch zwischen zwei Dampfstössen eingeschaltet sein. In einem solchen Fall teilt die Heizung dem Dampf im Garraum zusätzlich Wärmeenergie mit, welche zur Behandlung der Speisen ausgenützt werden kann.

Das laufende Turbinenrad sorgt nicht nur für eine gleichmässige Verteilung von Dampf im Garraum sondern auch dafür, dass der umgewälzte Dampf über die Speisen streicht und durch die Oeffnungen in die Speiseschalen strömt.

Die explosionsartigen Dampfstösse erhöhen sprunghaft den Druck im Garraum, was günstige Bedingungen für das Eindringen von energiereichem Dampf in die zu behandelnden Speisen schafft.

Im vorliegenden Verfahren und unter der Anwendung der vorliegenden Einrichtung können nicht nur gefrorene oder nur gekühlte Speisen regeneriert sondern auch frisch angerichtete Speisen gegart werden. Die frisch angerichteten Speisen können beispielsweise gebacken, getoastet, gedämpft usw. werden.

Im vorliegenden Verfahren und unter der Anwendung der vorliegenden Einrichtung können Speisen auf die schonenste Weise, innert der kürzesten Zeitspanne und ohne Einbussen an Qualität regeneriert oder sogar gegart werden. Weil jeweils nur kleine Mengen von Dampf im Garraum wirksam sind und weil die Gesamteinwirkung auf die Speisen sich aus der Gesamtanzahl der Einwirkungen der einzelnen und kleinen Dampfmengen ergibt, ist eine sehr feine und anpassungsfähige Dosierung von Wärmeenergie im Garraum ohne weiteres möglich. Unter solchen Umständen lässt sich beispielsweise ein Verkochen von Speisen leicht vermeiden.

## Patentansprüche

1. Verfahren zur Zubereitung von Speisen, dadurch gekennzeichnet, dass die Speisen in einem luft- bzw. druckdicht verschliessbaren Garraum aufgestellt werden und dass in diesem Garraum explosionsartige Dampfstösse erzeugt werden, derart, dass im Garraum ein beträchtlicher Ueberdruck gegenüber dem Umgebungsdruck entsteht.

2. Verfahren nach Anspruch 1, dadurch gekennzeichnet, dass eine dosierte Menge von Wasser in den druckdicht verschlossenen Garraum eingeführt wird, dass überwacht wird, wann der Druck im Garraum auf einen vorgegebenen Wert absinkt, dass hiernach eine weitere dosierte Menge Wasser in den Garraum eingeführt wird.

3. Verfahren nach Anspruch 2, dadurch gekennzeichnet, dass die Menge von Wasser bei der jeweiligen Wassereinführung konstant gehalten wird, dass die Länge der Zeitspanne zwischen zwei Einführungen von Wasserdosen überwacht wird und dass die Einführung von Wasser beendet wird, sobald die Länge der genannten Zeitspanne einen vorgegebenen Wert überschreitet.

4. Verfahren nach Anspruch 2, dadurch gekennzeichnet, dass die Zeitspanne zwischen zwei aufeinander folgenden Einführungen dosierter Mengen von Wasser konstant gehalten wird und dass die Menge von Wasser in den aufeinander folgenden Wassereinführungen dementsprechend verkleinert wird.

5. Verfahren nach Anspruch 2 oder 4, dadurch gekennzeichnet, dass eine verschliessbare Oeffnung (41) im Mantel (2) des Garraumes zumindest einmal zwischen zwei aufeinander folgenden Einführungen von Wasser geöffent wird, und dass der Zeitpunkt des Oeffnens der Oeffnung (41) an eine vorgegebene Zeitspanne gebunden sein kann, welche seit der zuletzt erfolgten Einführung von Wasser verstrichen ist.

6. Verfahren nach Anspruch 1, dadurch gekennzeichnet, dass Wasser in den Garraum in der Weise eingeführt werden kann, dass es in Form von Nebel in diesen Raum gelangt oder dass Wasser in den Garraum eingespritzt wird oder dass Wasser in den Garraum eingesprüht wird.

7. Verfahren nach Anspruch 1, dadurch gekennzeichnet, dass die im Garraum vorhandene Luft erhitzt wird, nachdem die Speisen im Garraum aufgestellt worden sind und bevor die Dampfstösse gestartet werden, dass eine verschliessbare Oeffnung (41) im Mantel (2) des Garraumes während der Anwärmungsphase offen sein kann und dass diese Oeffnung vor dem Beginn der Einführung von Wasser in den Garraum geschlossen wird.

8. Einrichtung zur Durchführung des Verfahrens nach Anspruch 1, mit einem Gehäuse (2), in welchem ein Garraum ausgebildet ist, mit einer am Gehäuse angebrachten Tür (3), welche die Be- und Entladung des Garraums mit Speisen ermöglicht, mit zumindest einem Heizkörper (20) im Garraum, mit einer Düse (40) und mit einer Steuervorrichtung (35), sowie mit einer Oeffnung (41), welche das Innere des Garraumes mit der Umgebung des Gehäuses (2) verbindet, dadurch gekennzeichnet, dass die Gehäusetür (3) derart ausgeführt ist, dass der Garraum druckdicht verschlossen werden kann, dass die Oeffnung (41) steuerbar verschliessbar ist und dass die Duse in diesen druckdicht verschliessbaren Garraum mündet und zur Einführung von Wasser in den Garraum ausgeführt ist.

9. Einrichtung nach Anspruch 8, dadurch gekennzeichnet, dass der Oeffnung (41) ein fernbedienbares Ventil (42) zugeordnet ist, welches den Querschnitt dieser Oeffnung (41) ändern kann, und dass die Oeffnung (41) vorteilhaft als ein Kanal (41) im Mantel des Gehäuses ausgeführt ist.

10. Einrichtung nach Anspruch 8, dadurch gekennzeichnet, dass die Düse (40) an eine Wasserquelle angeschlossen ist, welche derart ausgeführt ist, dass sie dosierte Mengen von Wasser unter Druck an die Düse abgeben kann.

11. Einrichtung nach Anspruch 8, dadurch gekennzeichnet, dass im Garraum sich zumindest ein Fühler (30) eines Thermometers und zumindest ein Fühler (31) eines Druckmessers befinden, deren Ausgänge an die Steuervorrichtung (35) angeschlossen sind.

12. Einrichtung nach Anspruch 8, dadurch gekennzeichnet, dass eine Durchführung (23) in einer der Wände des Gehäuses ausgeführt ist, dass diese Durchführung (23) eine Platte (24) umfasst, welche in der Gehäusewand in dichtender Weise eingesetzt ist, dass durch die Durchführplatte (24) die Zuführungen des Heizkörpers hindurchgehen und dass an dieser Platte (24) die Düse (40) sowie der Temperaturfühler (30) und der Druckmesserfühler (31) angebracht sind.

13. Einrichtung nach Anspruch 8, dadurch gekennzeichnet, dass ein Turbinenrad (37) sich im Inneren des Garraumes befindet, dessen Betrieb durch die Steuervorrichtung (35) steuerbar ist, dass dieses Turbinenrad (37) eine auf einer Antriebswelle sitzende Scheibe (38) aufweist, und dass die dem Inneren des Garraumes zugewandte Oberfläche der Scheibe (38) mit Rippen (39) versehen ist, welche von dieser Oberfläche abstehen und bogenförmig verlaufen können.

14. Einrichtung nach Anspruch 8, dadurch gekennzeichnet, dass Schalen (50) zur Aufnahme von zuzubereitenden Speisen vorgesehen sind, dass diese Schalen einen Unterteil (51) und einen Deckel (52) aufweisen und dass zumindest der Deckel (52) mit Durchlassöffnungen (53) versehen ist, durch welche Dampf in das Innere der Schale durchdringen kann.

## Claims

1. Process for the preparation of foodstuffs, wherein the food is placed in a cooking space that can be hermetically or pressure sealed and wherein explosion-like bursts of steam are produced in this cooking space in such a manner that considerable over-pressure results in the cooking space as compared to the ambient pressure.

2. Process as claimed in claim 1, wherein a dosed quantity of water is introduced into the hermetically sealed cooking space, wherein the pressure in the cooking space is monitored with the moment when the pressure drops below a pre-determined level being registered and wherein at this point a further measured dose of water is introduced into the cooking space.

3. Process as claimed in claim 2, wherein the amount of water introduced each time is maintained constant, wherein the time lag between two consecutive injections of water is monitored and wherein the injection of water is terminated as soon as the length of the time interval mentioned exceeds a given period.

4. Process as claimed in claim 2, wherein the time period between two consecutive injections of measured doses of water is maintained constant and wherein the amount of water in each consecutive injection is reduced accordingly.

5. Process as claimed in claim 2 or 4, wherein an orifice (41) which can be closed, situated in the casing (2) of the cooking space, is opened at least once between two consecutive injections of water, and wherein the moment of opening the orifice (41) can be synchronized to match a pre-determined time which has elapsed since the previous injection of water.

6. Process as claimed in claim 1, wherein water is introduced into the cooking space in such a manner that it reaches this space in the form of a mist or wherein water is injected into the cooking space or wherein water is sprayed into the cooking space.

7. Process as claimed in claim 1, wherein the air in the cooking space is heated after the food has been placed in the cooking space and before the injection of puffs of steam starts, wherein an orifice (41), which can be closed, in the casing (2) of the cooking space may be open during the warming-up phase and wherein this orifice is closed before any water starts to be introduced into the cooking space.

8. Device for implementing the process as claimed in claim 1, with a casing (2) containing a cooking space with a door (3) attached to the said cooking space, which enables food to be loaded and unloaded in the cooking space, having at least one heating element (20) in the cooking space with a nozzle (40) and with a controlling device (35) together with an opening (41) which connects the inside of the cooking space with the outside surroundings of the casing (2), wherein the casing door (3) is constructed in such a manner that the cooking space can be hermetically sealed, wherein the closure of the opening (41) can be controlled and wherein the outlet of the nozzle enters the cooking space which can be hermetically sealed, the nozzle being designed to introduce water into the cooking space.

9. Device as claimed in claim 8, wherein the opening (41) is assigned to a valve (42) operated by remote control which can alter the horizontal section of this opening (41) and wherein the opening (41) is advantageously constructed as a channel (41) in the jacket of the casing.

10. Device as claimed in claim 8, wherein the nozzle (40) is connected to a source of water which is constructed in such a manner that it can supply measured doses of water under pressure to the nozzle.

11. Device as claimed in claim 8, wherein there is in the cooking space at least one sensor (30) of a thermometer and at least one sensor (31) of a pressure gauge the ends of which are connected to the controlling device (35).

12. Device as claimed in claim 8, wherein there is a passage (23) constructed in one of the walls of the casing, wherein this passage (23) comprises a plate (24) which is set into the casing wall to act as a seal, wherein the leads of the heating element go through the passage plate (24) and wherein the nozzle (40) as well as the temperature sensor (30) and the pressure gauge sensor (31) are connected to this plate (24).

13. Device as claimed in claim 8, wherein there is a turbine wheel (37) located inside the cooking space, the operation of which can be controlled by means of the controlling device (35), wherein this turbine wheel (37) has a disk or pulley (38) located on a drive shaft and wherein the face of the disk or pulley (38) facing towards the inside of the cooking space has ribs (39) which project from this surface and which may run in a curve.

14. Device as claimed in claim 8, wherein containers (50) are provided as recipients for the food to be prepared, wherein these containers have a lower part (51) and a lid (52) and that the lid (52) at least has perforations (53) through which steam can penetrate inside the container.

## Revendications

1. Procédé en vue de la préparation de produits alimentaires, caractérisé par le fait que les produits alimentaires se trouvent placés dans une enceinte de cuisson à fermeture étanche où sont admises des projections de vapeur sous forme d'explosions, de sorte qu'une pression sensiblement supérieure à la pression ambiante est dégagée dans l'enceinte de cuisson.

2. Procédé selon revendication 1, caractérisé par l'admission d'un volume d'eau préalablement dosé dans l'enceinte de cuisson à fermeture étanche, par le contrôle de l'abaissement de la pression dans l'enceinte de cuisson jusqu'à une valeur prédéfinie, et l'admission consécutive d'un nouveau volume d'eau également prédosé dans l'enceinte de cuisson.

3. Procédé selon revendication 2, caractérisé par le maintien à un niveau constant du volume d'eau lors de l'admission de nouveaux volumes d'eau, par le contrôle de l'intervalle écoulé entre deux admissions d'eau et par le fait que l'eau cesse d'être admise dès que ledit intervalle dépasse la valeur prescrite.

4. Procédé selon revendication 2, caractérisé par le maintien à un niveau constant de l'intervalle séparant deux admissions successives de volumes d'eau préalablement dosés et par le fait que le volume d'eau introduit au cours de ces admissions successives est diminué en conséquence.

5. Procédé selon revendication 2 ou 4, caractérisé par le fait que l'ouverture à fermeture hermétique (41) située sur la surface latérale (2) de l'enceinte de cuisson s'ouvre une fois au moins entre deux admissions successives d'eau et que l'instant précis où se produit cette ouverture est lié à un intervalle prédéfini écoulé depuis la dernière admission d'eau.

6. Procédé selon revendication 1, caractérisé par le fait que l'eau introduite dans l'enceinte de cuisson y parvient sous forme de pulvérisation ou qu'elle est injectée ou pulvérisée dans l'enceinte de cuisson.

7. Procédé selon revendication 1, caractérisé par le fait que l'air contenu dans l'enceinte de cuisson est chauffé après que les produits alimentaires y ont été introduits et avant admission des jets de vapeur, que l'ouverture susceptible d'être hermétiquement fermée (41) montée sur la surface latérale (2) de l'enceinte de cuisson peut s'ouvrir au cours de la phase de réchauffement et qu'elle sera refermée avant que l'eau ne soit admise dans l'enceinte de cuisson.

8. Dispositif permettant l'application du procédé selon revendication 1, comprenant une enveloppe (2) contenant l'enceinte de cuisson avec une porte (3) creusée dans l'enveloppe et permettant le chargement et le déchargement des produits alimentaires dans l'enceinte de cuisson, comprenant en outre au moins un corps de cuisson (20) dans l'enceinte de cuisson, une buse (40) et un dispositif de commande (35) ainsi qu'une ouverture (41) reliant l'intérieur de l'enceinte de cuisson et l'extérieur de l'enveloppe (2), caractérisé par le fait que la porte de l'enveloppe (30) permet de fermer hermétiquement l'enceinte, que l'ouverture (41) peut être fermée sur commande, que la buse est raccordée à ladite enceinte de cuisson à fermeture hermétique et conçue de manière à pouvoir y introduire de l'eau.

9. Dispositif selon revendication 8, caractérisé par l'insertion dans l'ouverture (41) d'un robinet commandable à distance (42), robinet permettant de modifier la section transversale de cette ouverture (41), et par le fait que l'ouverture (41) revêt la forme d'un conduit (41) monté sur la surface transversale de l'enveloppe.

10. Dispositif selon revendication 8, caractérisé par le raccordement de la buse (40) à une source d'eau de manière à ce que les volumes d'eau préalablement dosés puisse être débités sous pression à la buse.

11. Dispositif selon revendication 8, caractérisé par la présence dans l'enceinte de cuisson d'un détecteur (30) au moins de température et d'un détecteur (31) au moins de pression dont les sorties sont reliées au dispositif de commande (35).

12. Dispositif selon revendication 8, caractérisé par le fait qu'une douille de traversée (23) est montée sur une des parois de l'enveloppe, que cette douille (23) comporte une plaque (24) montée sur la paroi de l'enveloppe de manière à la rendre étanche, que les alimentations du corps de chauffe passent par la plaque de la douille (24) et que la buse (40), le détecteur de température (30) et le détecteur de pression (31) y sont montés.

13. Dispositif selon revendication 8, caractérisé par le fait qu'une roue de turbine (37) se trouve à l'intérieur de l'enceinte de cuisson et qu'elle peut être commandée par le dispositif de commande (35), que cette roue de turbine (37) possède un disque (38) reposant sur un arbre de transmission et que la surface du disque (38) tournée vers l'intérieur de l'enceinte de cuisson comporte des ailettes (39) partant de cette surface et pouvant s'arquer.

14. Dispositif selon revendication 8, caractérisé par le fait que des récipients (50) sont prévus pour accueillir les produits alimentaires destinés à la préparation, que ces récipients comportent une partie inférieure (51) et un couvercle (52) et que le couvercle (52) au moins est équipé d'orifices (53) par lesquels la vapeur peut pénétrer à l'intérieur du récipient
